# EUROPEAN PATENT APPLICATION

(11) **EP 2 782 059 A1**
(43) Date of publication of application: **24.09.2014**
(21) Application number: 13250030.7
(22) Date of filing: 19.03.2013
(51) Int. Cl.: G06Q 30/02, H04N 21/431, H04N 21/44, H04N 21/4402, H04N 21/81, G11B 27/00

(54) **VIDEO PLAYBACK**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A video playback device includes a fast forward facility arranged such that a modified video sequence 11 is automatically delivered for display when operating at fast forward speeds. The modified images 110, 112, ..... etc in the modified sequence 11 comprise part 120, 122, 124 ........etc of each image 100, 102 etc in the original sequence 10, enlarged to extend over a greater part of the display area than in the original content. This allows special messages or other images readable at fast forward speeds to be carried in the video content and made prominent during fast forward mode. Such messages may be provided by content providers, for example to convey a sponsor's advertisement, or as an aid to navigation of the content in fast forward mode

## Description

This invention relates to the high-speed playback of video streams, downloads or recordings. There are many services available which allow audio or video content to be recorded or downloaded for local storage from a remote source such as a video service provider platform. This allows the user to view the content at a later time than the download or broadcast, or to view it more than once.

The content may be downloaded as it is broadcast, by controlling the client device so as to record the content as it is received, or it may be downloaded on demand from a store of video content maintained by the service provider or an associated content provider. Such systems include "catch-up" services which allow a user to watch an episode of a series at a later time than it was broadcast without having had to set up a timer-operated recording device in advance of the broadcast time

It has long been the practice to arrange video playback equipment such that a user can start or resume content playback at any point in the content. "Fast forward" and "fast reverse" controls allow the user to locate the start of section of the video content that he wishes to view. Whilst in these modes the soundtrack is usually muted, but sufficient video frames are often made visible to allow the user to locate the point he is seeking - for example for a "4-times" fast forward only 25% of the frames may be shown.

The "fast-forward" or 'rewind' facility allows the end user to speed past content of no interest to him to reach a point where they wish to resume watching. However, the content provider may have a legal or commercial requirement that the end user should not skip certain parts of the content, for example advertising, statutory notices, warnings of the nature of the content, etc. Also, in addition to the fast-moving images and the time which is normally displayed, it can be desirable to provide a guide as to what part of the programme has been reached in fast forward mode. For example in a music video it may not be readily apparent from the visual content alone which musical number is associated with it.

Some systems are able to determine the type of content being played back and for example disable or restrict the fast-forward or rewind or skip controls for certain content. However, this is not always possible or practical.

Most free-to-user content is paid for by revenue from advertisements forming part of the content stream. Although the content is usually still visible in fast forward mode, without the sound track it may lose much of its meaning. Moreover, much effort goes into making advertising material tell a story, often with the branding, appearing relatively briefly only at the end. When accelerated by a fast forward function, the brand, product name or essential message may appear for too short a time to actually register with the viewer. Sponsors are less willing to place advertisements in video content from which it can be effectively skipped past, so content providers are finding sponsorship increasingly difficult to find, which ultimately reduces the quality and quantity of programme content that can be produced and made available to the viewing public

Many playback devices are consumer products, bought by and the property of the end user, but some service providers supply special receiving devices, or special programming for existing devices, and therefore retain control over access to the content, and in particular over, the functions that the device can perform.

The simplest way of ensuring that special content cannot be skipped would be to not provide, or disable, the fast forward function, but this is inconvenient for the user. The present invention provides a system which enables certain content to be handled in a special way when a fast forward function is in use.

If desired, the same principles could be applied to the "fast reverse" function, and for that reason the operation will be described herein as an "accelerated play" function.

According to the invention, there is provided a method of processing a stream of video data for output to a display area of a display unit, wherein the video data may be selectively displayed at a plurality of different speeds, the video data comprising data for presentation of a succession of images on a display screen, wherein at a first speed substantially the entirety of each image is delivered to the output for display over substantially the entirety of the display area, and wherein at a second speed an enlarged part of each image is delivered for display over a substantial part of the display area.

According to another aspect, there is provided a video playback device having a video data retrieval system and an interface for delivery of the retrieved data to a display device, and a speed control system for controlling the rate at which the video data is to be displayed on the display device, and comprising a playback management processor responsive to the speed control system such that at a first speed it delivers substantially the entirety of each image to the output for display over substantially the entirety of the display area, and having an extraction processor responsive to the speed control system such that at a second speed it extracts part of each image and assembles the extracted part for display at enlarged size over a substantial part of the display area.

The term "substantial part of the display area" in the specification embraces arrangements up to and including the entirety of the display area.

Preferably, when operating at the second speed substantially the entirety of each image is delivered to the output for display over a part of the display screen. The video data stream may comprise marker data indicative of parts of the video data stream for which the enlarged partial image is to be displayed. The marker data may comprise an icon present in part of each frame of the video data.

The invention allows alternative content to appear during an accelerated play function. This is achieved by changing the display according to what speed the playback equipment is operating. One application of this invention might be for advertising. For example, a 30-second commercial, may have just the last two seconds taken up by the final "message" scene depicting the product being advertised, or a slogan. When speeded up eight times, this scene would last only ¼ sec, which would give it much less impact. By enlarging a part of the screen, a part containing the essential message, for example an advertiser's logo can be made to take up a greater proportion of the complete scene. This allows the essential message to be given a similar prominence to that in the normal speed content. A content provider can provide any content he desires in the part of the screen that is to be enlarged, for example an advertiser's logo or slogan, a 'chapter name' of a long programme (e.g. a film), or the title of a song in a music video. The playback apparatus may be arranged to display the enlarged portion automatically whenever it is in fast forward mode, or only in response to a trigger in the content signal.

The appearance of new unexpected content during a fast forward operation may be disconcerting for the user, who may think that the accelerated play function has stopped working, perhaps due to a failure, or mishandling, of the control unit. Such distraction would reduce the impact of the special content on the user. To avoid this effect, one embodiment provides for the special content to be superimposed on the normal content, for example as a caption, or alternatively with the normal content displayed in "picture within picture" form within the special content (or vice versa). Thus the accelerated content remains visible, reassuring the user that the fast forward function is still operating and allowing the user to identify the point in the content that has been reached.

Exemplary embodiments of the invention will now be described with reference to the drawings, in which:
Figure 1 illustrates a video playback device operating according to the invention;
Figure 2 illustrates a video data stream running at normal speed and in a conventional fast forward mode;
Figure 3 illustrates a frame of the video stream according to the invention as displayed in normal mode and as displayed in fast forward mode;.
Figure 4 illustrates a video data stream running at normal speed and in a fast forward mode according to the invention.

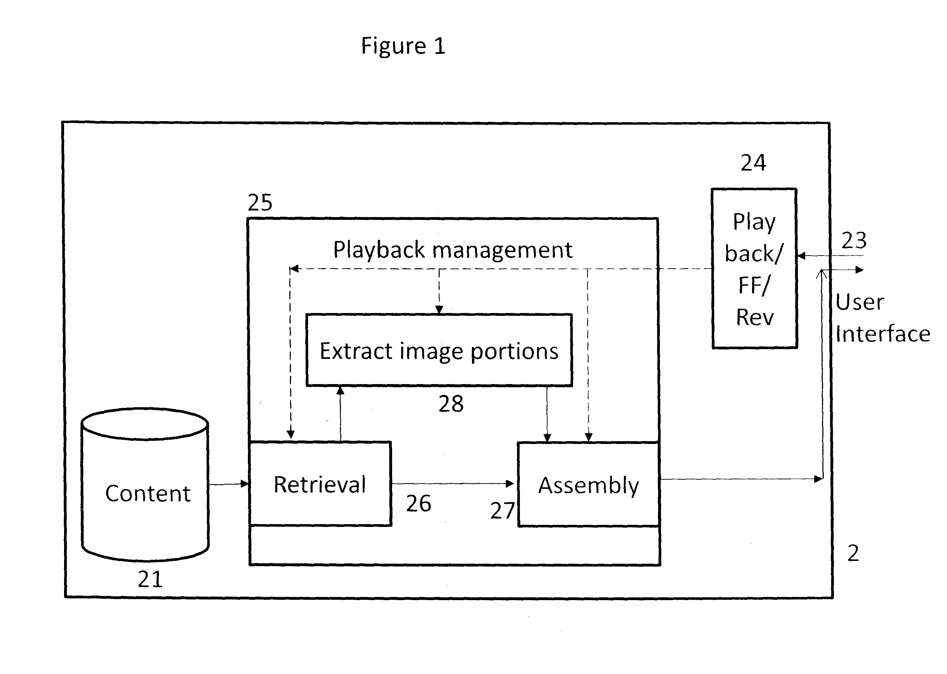

It will be understood that Figure 1 depicts the functional elements required to operate the invention. These elements may be embodied in software running on a computer, or on a distributed system.

Figure 1 illustrates a video playback device 2 for use in the invention. A content database 21 stores video data previously provided, for example from a content provider over a data communications system (not shown) such as a broadcast TV network or the Internet. Alternatively, the content may be stored on a carrier such as a DVD.

The playback device has an interface 23 with a user device such as television set, or an integral screen, for display of the content. (The term "display" is here used to embrace any format that a user can detect, such as audio, but it will in general include a visual element).

A playback management system 25 is arranged to retrieve the data from the content store 21 for delivery to the user display interface 23. An input unit 24 allows a user to control the playback management system 25. The user device used for such input may be integral with the device 2 and/or the output 23, for example a computer keyboard, or it may be a separate device such as a remote control unit. Typical user input functions include the selection of content for download to the store 21 for subsequent playback, or to set a timer to download broadcast material at some future time, and editing the contents of the store 21, for example to delete content after it has been viewed.

The input functions also include playback control functions, such "play", "pause", "fast forward", "reverse" etc, which control the playback management system 25 to access different parts of the content 21.

The playback management system 25 comprises a retrieval processor 26 for retrieving the content requested by the user input unit 24 and an assembly unit 27 for compiling the video data into a video stream for delivery to the user interface 23. The assembly unit 27 is controlled by the playback unit 24 to deliver the video stream at the requested rate, for example when in fast forward mode the frames are delivered at a higher rate, or some frames are omitted. When In reverse mode the retrieval system 26 is arranged to retrieve the content in reverse order for delivery to the assembly unit 27, which again can deliver the reversed stream at one of several speeds in accordance with commands from the user input unit 24.

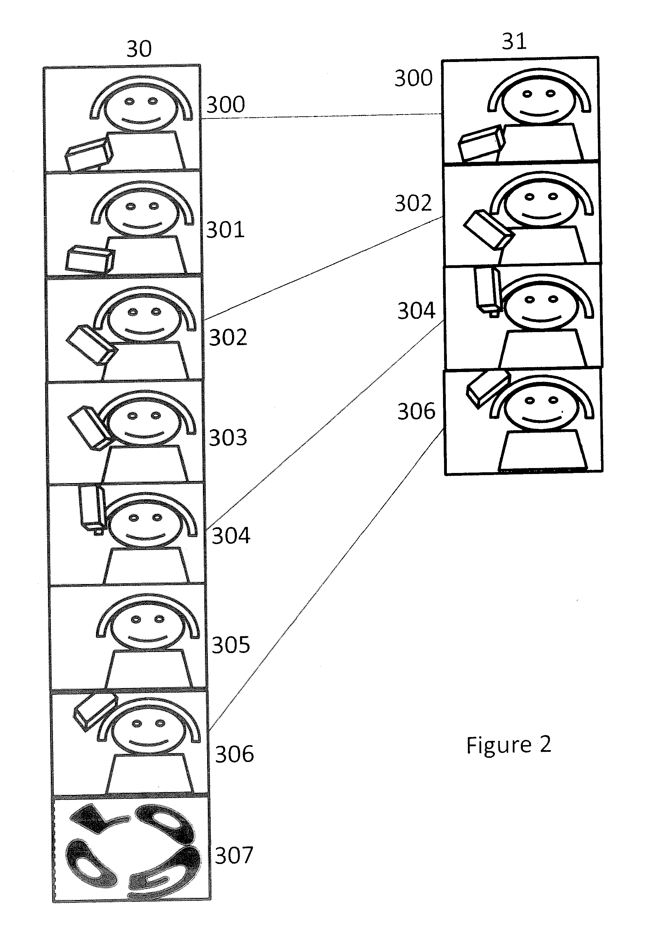

As is well-known, most fast forward and reverse functions cause the playback system to step through the content at a rate faster than normal playback, whilst displaying selected frames of the content. This allows the user to readily identify the part of the content that he is seeking. This is illustrated schematically in Figure 2, wherein a video stream 30 is made up of individual segments 300, 301, 302, ........315 etc. (Typically each segment is made up of a few frames). When operated in "fast forward" mode, many segments may be omitted, so that a stream 31 is displayed comprising only a few of the segments 300, 302, 304........etc. The proportion of segments to be omitted typically depends on the fast-forwarding rate, which may be selectable, for example, double speed, 4x, 8x, 16x, 32x.

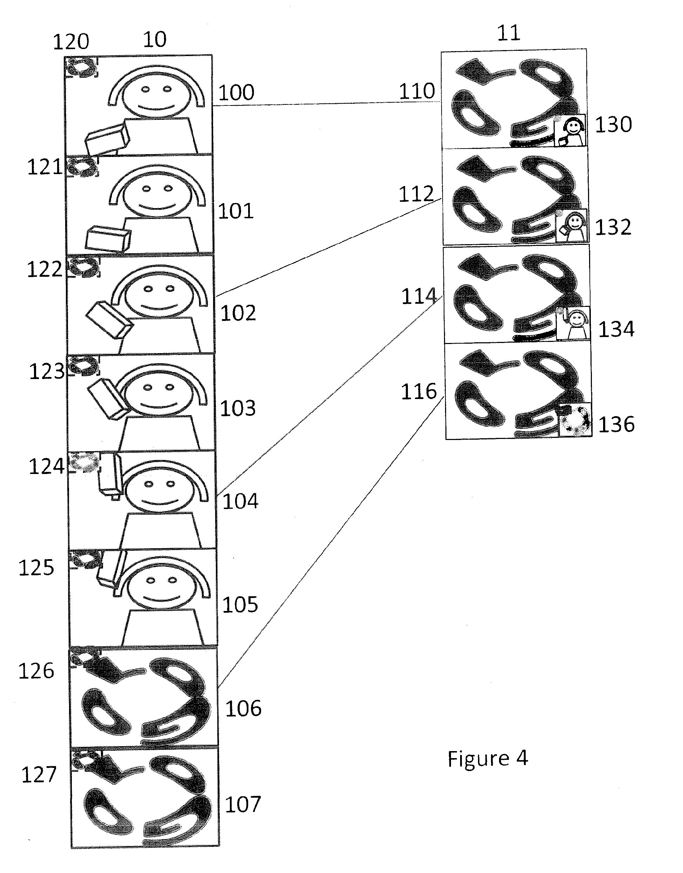

In Figure 2 (and Figure 4, which will be discussed later) the segments selected for display in accelerated play mode are shown as being selected at regular intervals. However, in practice the selection may be done according to some other criterion: for example in the MPEG system the i-frames (key frames) may be preferentially selected, with a number of P- and B-frames added if required to make up the required frame-rate.

Operation in "reverse" mode is similar, with the segments being displayed in reverse order. At high fast-forward speeds, the content may be difficult or impossible to understand, particularly as the soundtrack is generally muted. It can be difficult to navigate certain types of programme, and content providers may wish certain content e.g. advertisements to be clearer when being fast-forwarded.

It will be noted in Figure 2 that, because not all frames are delivered, the message may be difficult to understand in accelerated play mode, and essential elements (e.g frame 315) may be absent altogether or present for too short a time for the viewer to comprehend.

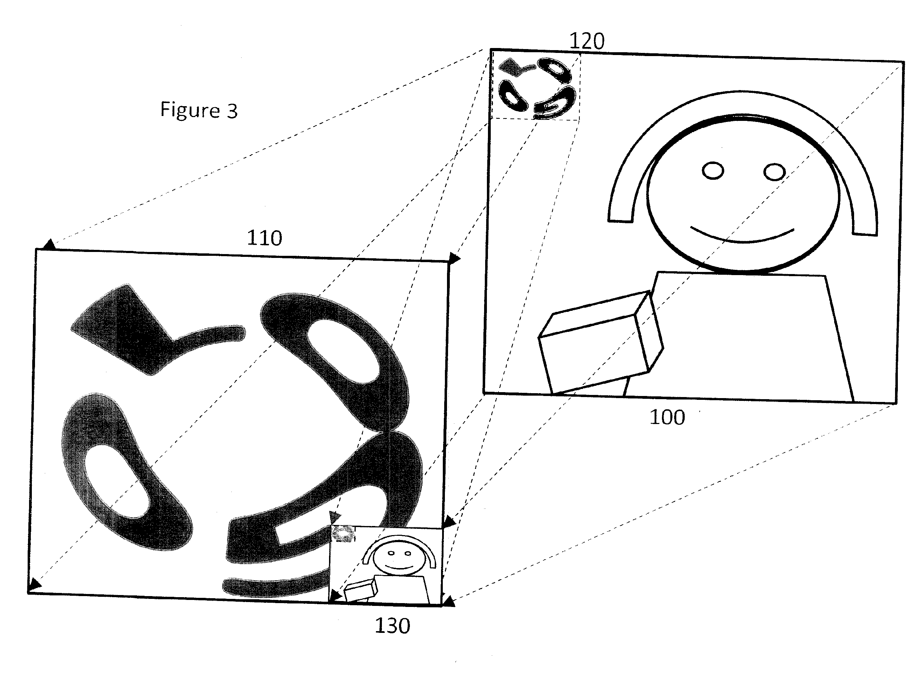

According to the invention, the playback management system 25 is provided with an extraction processor 28 which modifies the images in the sequence retrieved by the retrieval unit 26 before delivery to the assembly unit 27. In particular, referring to Figure 3, it is arranged to select a section 120 of the original frame 100 when the "accelerated play" function 24 is active, and deliver that section 120 to the assembly unit 27. The assembly unit 27 is arranged to enlarge the selected section 120 to generate a new frame 110 which is delivered to the user interface 23 instead of the original frame 100.

As shown in Figure 3, during a fast forward operation, a frame 100 of the video sequence is replaced by a frame 110. The replacement frame 110 depicts a selected portion 120 of the original frame 100, enlarged to the full size of the frame. In the preferred arrangement the assembly unit 27 also superimposes the full frame 100, at reduced size, in a portion 130 of the replacement frame 110.

Figure 4 depicts the compilation of an accelerated sequence 11 from an initial sequence 10 by the process of the invention. In comparison with Figure 2, the accelerated sequence shown in Figure 4 does not simply comprise elements of the original sequence 10, but instead each replacement frame 110, 112, 114, 116 comprises an enlarged version of a portion 120, 122, 124, 126 of the respective original frame 100, 102, 104, 106. In the preferred arrangement the original frames 100, 102, 104, 106 are reproduced at reduced size in portions 130, 132, 134, 136 of the respective replacement frames 110, 112, 114, 116.

The playback management system 25 may be programmed to identify a specified marker in a predetermined portion 120 of the frame and only enlarge that portion to the full screen size (110), if the marker is present.

It is of course a matter for the content providers to decide how to make use of the facility, by selecting what content to place in the area 120, 121, etc to be enlarged. For example such content may be provided to assist navigation of the video content (chapter headings, song titles etc), or it may be information that the content providers, or their sponsors, do not want the viewer to miss seeing.

## Claims

1. A method of processing a stream of video data for output to a display area of a display unit, wherein the video data may be selectively displayed at a plurality of different speeds, the video data comprising data for presentation of a succession of images on a display screen, wherein at a first speed substantially the entirety of each image is delivered to the output for display over substantially the entirety of the display area, and wherein at a second speed an enlarged part of each image is delivered for display over a substantial part of the display area.

2. A method according to claim 1, wherein at the second speed substantially the entirety of each image is delivered to the output for display over a part of the display screen.

3. A method according to claim 1 or claim 2, further comprising the detection of marker data in the video data stream indicative of parts of the video data stream for which the enlarged partial image is to be displayed.

4. A method according to claim 3, in which the marker data is an icon present in part of each frame of the video data.

5. A video playback device having a video data retrieval system and an interface for delivery of the retrieved data to a display device, and a speed control system for controlling the rate at which the video data is to be displayed on the display device, and comprising a playback management processor responsive to the speed control system such that at a first speed it delivers substantially the entirety of each image to the output for display over substantially the entirety of the display area, and having an extraction processor responsive to the speed control system such that at a second speed it extracts part of each image and assembles the extracted part for display at enlarged size over a substantial part of the display area.

6. A video playback device according to claim 5, wherein at the second speed the extraction processor also selects substantially the entirety of each image and assembles the image for output for display over a part of the display screen.

7. A video playback device according to claim 5 or claim 6, wherein the extraction processor is arranged to detect marker data in the video data stream indicative of parts of the video data stream for which the enlarged partial image is to be displayed.

8. A video playback device according to claim 7, in which the extraction processor is arranged to detect icons present in part of each frame of the video data.
